# EUROPEAN PATENT SPECIFICATION

(11) **EP 1 662 754 B1**
(45) Date of publication and mention of the grant of the patent: **28.11.2007**
(21) Application number: 05015776.7
(22) Date of filing: 20.07.2005
(51) Int. Cl.: H04M 1/02

(54) **Sliding module for sliding-type portable terminal**
Schiebevorrichtung für ein verschiebbares Kommunikationsendgerät
Module coulissant pour un terminal de communication portable de type coulissant

(30) Priority: 25.11.2004 KR 2004097675
(43) Date of publication of application: 31.05.2006
(73) Proprietor: Samsung Electronics Co., Ltd, Suwon-si, Gyeonggi-do (KR)
(72) Inventor: Lee, Ui-Jin, c/o Samsung Electronics Co., Ltd., Suwon-si, Gyeonggi-do (KR)
(74) Representative: Grünecker, Kinkeldey, Stockmair & Schwanhäusser Anwaltssozietät

(56) References cited:
- EP-A- 1 075 125
- EP-A- 1 307 030
- US-A1- 2004 085 739
- US-A1- 2004 198 437

## Description

The present invention relates to a sliding module for a sliding-type portable terminal, and more particularly, to a sliding-type portable terminal having a pair of side sliding modules and at least one stopper means.

Document US 2004/0198437 A1 shows a slide-type portable apparatus with a sliding housing 100 and a main housing 219. A stop spring 304 has a shape corresponding to stop recess portions in the sliding housing. When the sliding housing and the main housing are retracted, the free end of the stop spring enters into the stop recess portion to restrain the sliding housing from moving in the extension direction. A notch portion is formed in a side wall of the main housing at a position corresponding to the mounting position of the stop spring. A stop-release operation member 301 is engaged with this notch portion. An inwardly protruding piece 301a of the stop-release operation member is adapted so as to come in contact with the upper slope of the stop spring 304 and tension by the stop spring urges the stop-release operation member toward the upper end of the portable telephone set.

The document EP 1 307 030 A2 shows a portable communication apparatus that includes a main housing and a sliding housing which are connected by a slide mechanism so that they are capable to freely slide in a longitudinal direction. A stopper-release operation member 104 is provided on the main housing. A stopping means is provided to lock the sliding housing. When the stopper-release operation member slides, the lock mechanism of the main housing and sliding housing is released to cause the sliding housing to automatically slide upward with respect to the main housing. The stopper is engaged with a stopping hole provided in the guide leg of the sliding housing when retracted. The locking of the stopper can be released by operating the stopper-release operation member.

A "portable communication apparatus" is an apparatus used for wireless communication. Portable communication apparatuses may be classified into various categories according to their appearance, such as bar-type terminals, flip-type terminals, and folder-type terminals. The bar-type terminals have a single housing shaped like a bar. The flip-type terminals have a flip that is rotatably coupled to a bar-shaped housing by a hinge device. The folder-type terminals have a folder connected to a single bar-shaped housing by a hinge device in such a manner that the folder can be rotated to fold onto, or unfold from, the housing.

In addition, portable communication apparatuses may be classified into rotation-type terminals and sliding-type terminals according to the way in which the terminal opens and closes. With rotation-type terminals, two housings are coupled to each other in such a manner that one housing rotates to open or close relative to the other. In sliding-type terminals, two housings are coupled to each other in such a manner that one housing slides along a longitudinal direction to open or close relative to the other. These portable communication apparatuses can be easily understood by those skilled in the art.

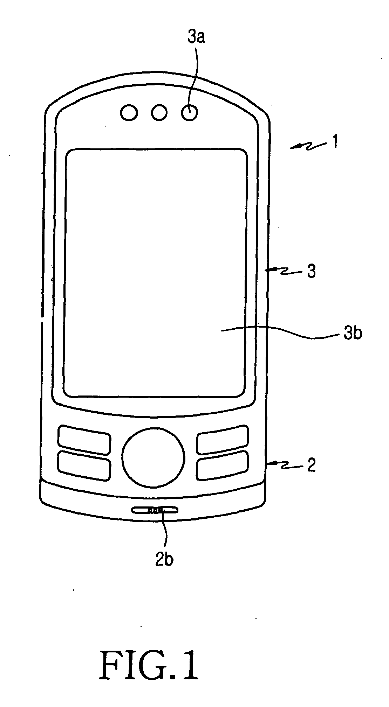

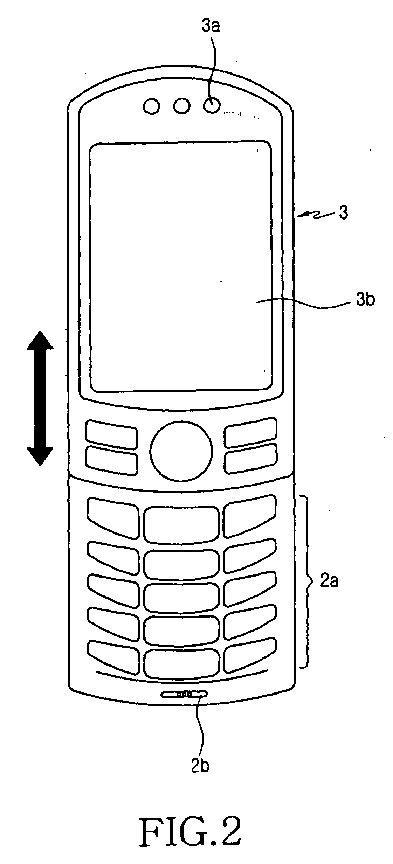

As shown in FIGs. 1 and 2, a conventional sliding-type portable terminal 1 includes a main body 2 having a number of keypads 2a and a microphone device 2b and a sliding body 3 adapted to slide half the length of the main body 2 upward to open, and downward to close. The main body 2 has a 3x4 keypad array. The sliding body 3 has a speaker device 3a and a display device 3b positioned on the front surface thereof.

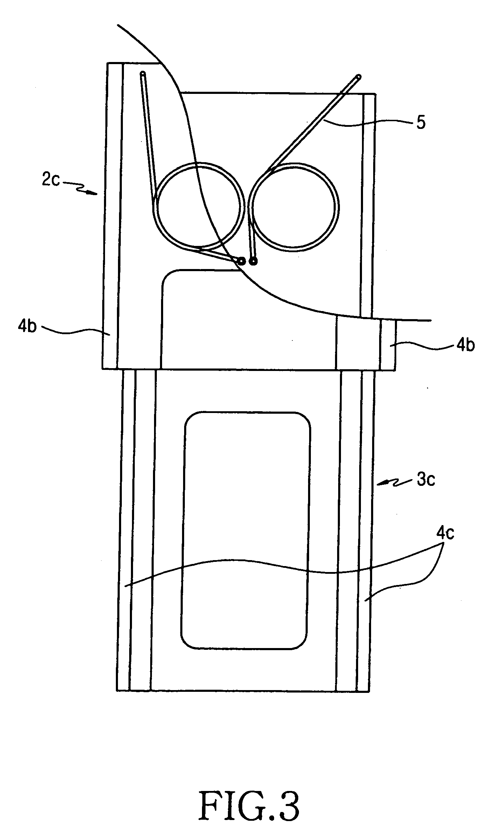

The conventional siding-type portable terminal 1 as shown in FIG. 3 includes a main body 2, a sliding body 3 adapted to slide a predetermined distance on the main body 2, guide means 4 positioned within the main body 2 and the sliding body 3 to guide the sliding body 3 on the main body 2, and at least one coil spring 5 positioned between the sliding body 3 and the main body 2 to provide the elastic force for the upward and downward sliding movement of the sliding body 3.

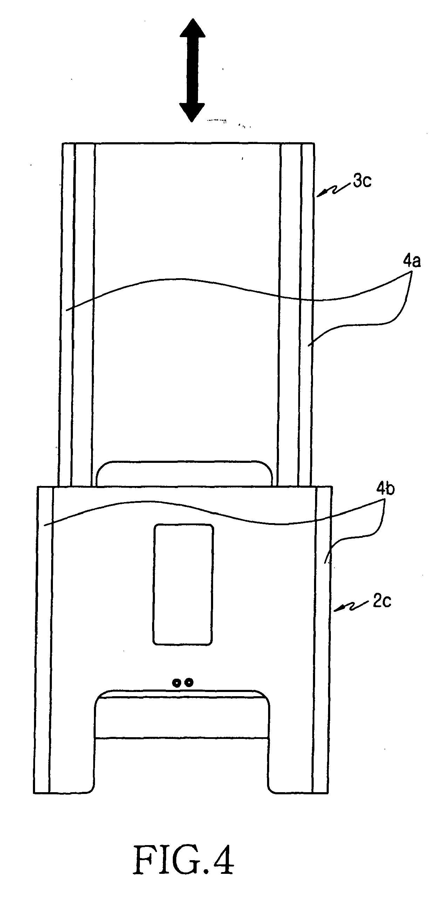

The main body 2 has a plate-shaped main plate 2c and the sliding body 3 has a plate-shaped sliding plate 3c as shown in FiGs. 3 and 4.

The guide means 4 include guide ribs 4a on both sides of the plate-shaped sliding plate 3c and guide slots 4b on the plate-shaped main plate 2c to be coupled to the guide ribs 4a.

This conventional sliding-type portable terminal having a plate-shaped main plate positioned in the main body, a plate-shaped sliding plate positioned in the sliding body, and a driving spring positioned between the plates to slide the sliding body is limited in that the radius of rotation of the spring is determined by the width of the plates. As a result, the size and thickness of the plates cannot be reduced, creating an obstacle to manufacturing a compact terminal and degrades the terminal design.

Since the plates and the guide means are integrally coupled to each other, it is difficult to consider their tolerance level, and thus, determine how long they will last under normal use. Furthermore, it becomes costly to replace them if broken.

The plates and the guide means also have a large contact surface during sliding, creating noise, poor operation and increased friction, which leads to a shorter useful lifespan.

When the coil spring positioned in the plates is moved repeatedly over time, the elasticity of the spring decreases to the point of failure, making it unable to move the terminal. In addition, the stopper function of the terminal also deteriorates.

Accordingly, the present invention has been made to solve the above-mentioned problems occurring in the prior art.

It is the object of the present invention to provide a sliding module for a sliding-type portable terminal having at least one stopper means adapted to engage or disengage, depending on the movement of the terminal, and limit the movement of the sliding housing so that the impact on the stopper during sliding movement of the terminal is dispersed to alleviate the fatigue of the stopper.

This object is solved by the subject matter of the independent claims.

Preferred embodiments are defined in the dependent claims.

An aspect of the present invention is to provide a sliding module for a sliding-type portable terminal having a pair of side sliding modules to reduce the size and thickness of the terminal and achieve a compact size.

Another aspect of the present invention is to provide a sliding module for a sliding-type portable terminal having a pair of side sliding modules made up of a metallic material to prevent wear and tolerance problems caused by repeated sliding movement for prolonged life of the terminal, and to facilitate the replacement of worn components.

Another aspect of the present invention is to provide a sliding module for a sliding-type portable terminal having a pair of side sliding modules for easy sliding opening/closing operation of the terminal.

To accomplish the above, there is provided a sliding module according to claim 1 for a sliding-type portable terminal including a main housing extending along a longitudinal direction; a sliding housing coupled to the main housing in such a manner that it can slide; a pair of side sliding modules positioned between both sides of the sliding housing and coupled to both longitudinal ends of the main housing to slide the sliding housing in a direction approaching or away from the main housing; and at least one stopper means positioned in the housing and adapted to engage or disengage, as it slides together with the housing, to limit the sliding movement of the sliding housing.

The above object and other aspects, features and advantages of the present invention will be more apparent from the following detailed description taken in conjunction with the accompanying drawings, in which:
FIG. 1 is a front view showing a conventional sliding-type portable terminal prior to operation;
FIG. 2 is a front view showing a conventional sliding-type portable terminal of FIG. 1 after operation;
FIG. 3 is a front view showing a main plate, a sliding plate, and a driving spring among the construction of the sliding-type portable terminal shown in FIG. 1;
FIG. 4 is a front view showing a main plate and a sliding plate among the construction of the sliding-type portable terminal shown in FIG. 2;
FIG. 5 is an exploded perspective view showing the construction of a sliding module for a sliding-type portable terminal according to a preferred embodiment of the present invention;
FIG. 6 is an assembled perspective view showing the construction of the sliding module of FIG. 5;
FIG. 7 is a sectional view taken along line A-A' of FIG. 6;
FIG 8 is a sectional view magnifying part A of FIG 7;
FIG. 9 is a perspective view showing a sliding module for a sliding-type portable terminal, prior to operation, according to a preferred embodiment of the present invention;
FIG. 10 is a perspective view showing a guide movement groove in the construction of the sliding module of FIG. 9;
FIG. 11 is a perspective view showing a movement stop member from behind among the construction of a sliding module for a sliding-type portable terminal according to a preferred embodiment of the present invention;
FIG. 12 is a perspective view showing a sliding module for a sliding-type portable terminal, after sliding movement, according to a preferred embodiment of the present invention;
FIG. 13 is a perspective view showing a sliding module for a sliding-type portable terminal, during movement, according to a preferred embodiment of the present invention;
FIG. 14 is a perspective view showing a stopper means in the sliding module of FIG. 13;
FIG. 15 is a lateral sectional view showing a sliding module for a sliding-type portable terminal according to a preferred embodiment of the present invention;
FIG. 16 is a lateral sectional view showing an enlarged part B of FIG. 15 prior to operation of a stopper means;
FIG. 17 is a lateral sectional view showing an enlarged part B of FIG. 15 during operation of a stopper means; and
FIG. 18 is a perspective view showing a main housing and a movement stop member from behind among the construction of a sliding module for a sliding-type portable terminal according to a preferred embodiment of the present invention.

Hereinafter, preferred embodiments of the present invention will be described with reference to the accompanying drawings. In the following description of the present invention, a detailed description of known functions and configurations incorporated herein will be omitted when it may make the subject matter of the present invention unclear.

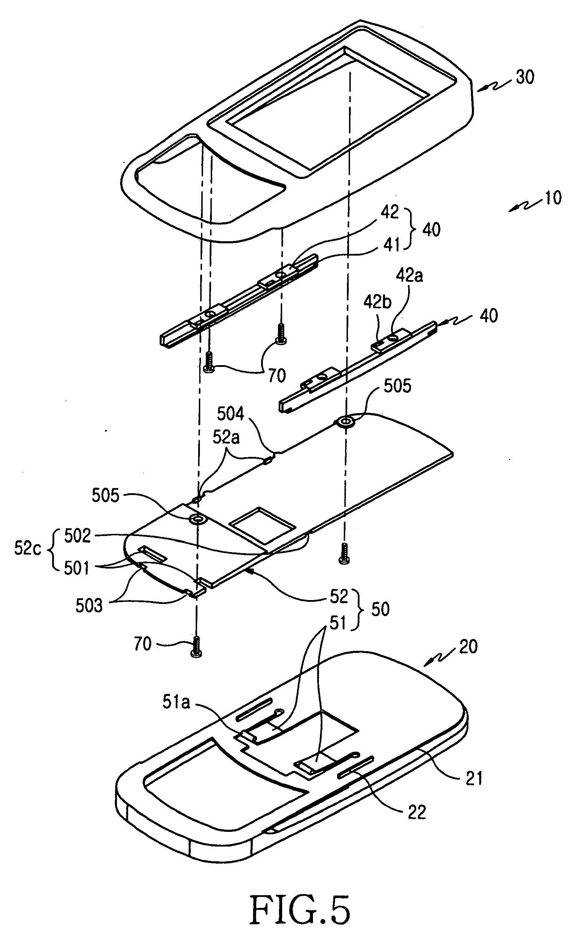

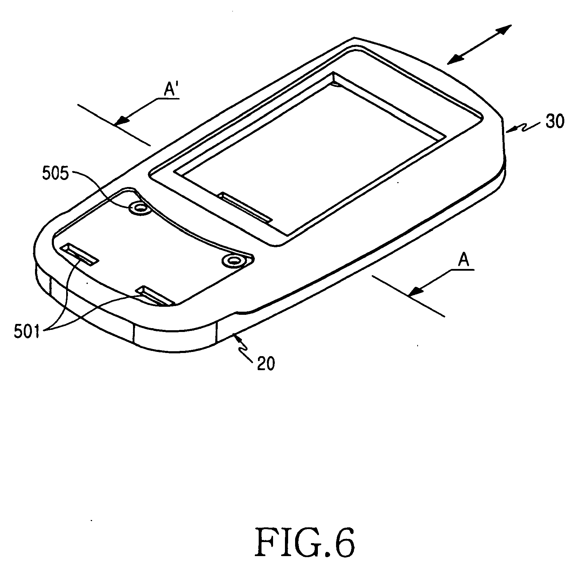

As shown in FIGs. 5 and 6, a sliding module 10 for a sliding-type portable terminal includes a main housing 20, a sliding housing 30, a pair_of slide sliding modules 40, and a stopper means 50. The main housing 20 extends along a longitudinal direction so that the sliding housing 30 can slide. The sliding housing 30 is slidably coupled to the main housing 20. The pair of side sliding modules 40 are coupled to both longitudinal sides of the main housing 20 and are positioned between both sides of the sliding housing 30 so that the sliding housing 30 can slide longitudinally, up or down with respect to the main housing 20.

The stopper means 50 is positioned between the main and sliding housings 20 and 30 and is adapted to engage or disengage, as it slides together with the sliding housing 30, and limits the sliding movement of the sliding housing 30.

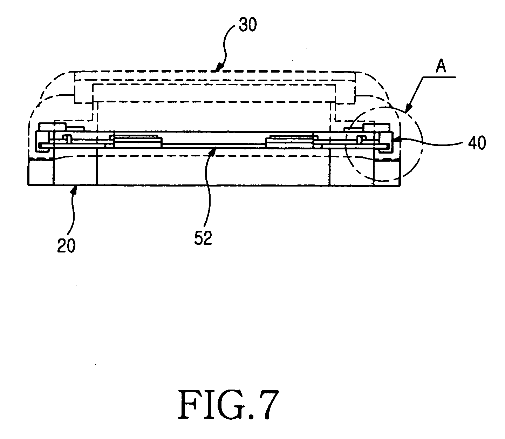

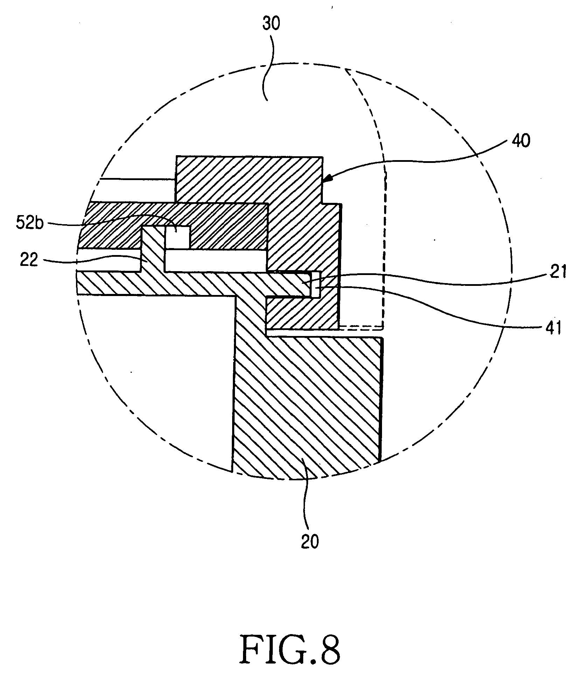

As shown in FIGs. 7 and 8, the main housing 20 has guide rails 21 formed on both ends thereof along the longitudinal direction to guide the sliding movement of the side sliding modules 40. In addition, there is at least one guide protrusion 22 formed adjacently to the guide rails 21. The protrusion 22 is coupled to the stopper means 50 and also guides the sliding movement of the side sliding modules 40.

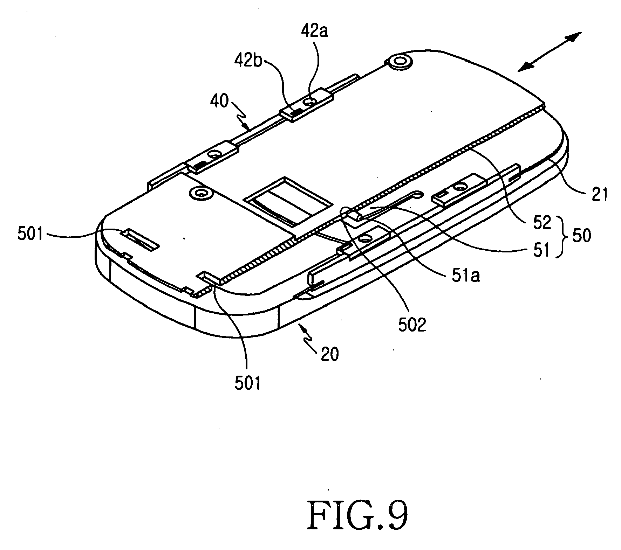

As shown in FIGs. 5 and 9, the side sliding modules 40 can be mounted within the sliding housing 30 along the longitudinal direction thereof with a number of screws 70.

As shown in FIGs. 5 and 7, the pair of side sliding modules 40 include a guide groove 41 and at least one module fastening portion 42. The guide groove 41 extends along the longitudinal direction of the sliding housing 30 and is coupled to the guide rail 21 in such a manner that it can slide along the guide rails 21. The module fastening portion 42 is formed along the guide groove 41 and is mounted on the interior of the sliding housing 30.

As shown in FIG. 9, the module fastening portion 42 has a screw hole 42a formed thereon to be fastened to the sliding housing 30 with a screw 70 and a coupling hole 42b formed adjacently to the screw hole 42a to be coupled to the coupling protrusion 52a of the stopper means 50.

As shown in FIG. 5, 9 and 11, the stopper means 50 includes at least one hook portion 51 and a movement stop member 52. The hook portion 51 is formed on the interior of the main housing 20 and is adapted to engage or disengage the engagement means 52c (described later) of the movement stop member 52 by means of an elastic force as the sliding housing 30 slides. The movement stop member 52 is positioned on the interior of the sliding housing 30 while extending along the longitudinal direction and is adapted to engage or disengage by means of the elastic force from the hook portion 51 while traveling together with the sliding housing 30.

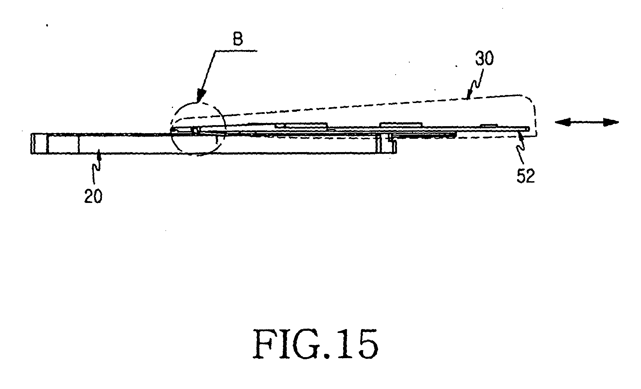

As shown in FIGs. 15, 16, and 17, the hook portion 51 is preferably made up of a leaf spring. The leaf spring 51 has an engagement protrusion 51a formed on an end thereof, which is adapted to engage and disengage the engagement holes 501 and catching grooves 502 (described later) of the engagement means 52. An end of the leaf spring is bent at a specific, predetermined angle to provide the engagement protrusion 51a with a bias, or elastic force.

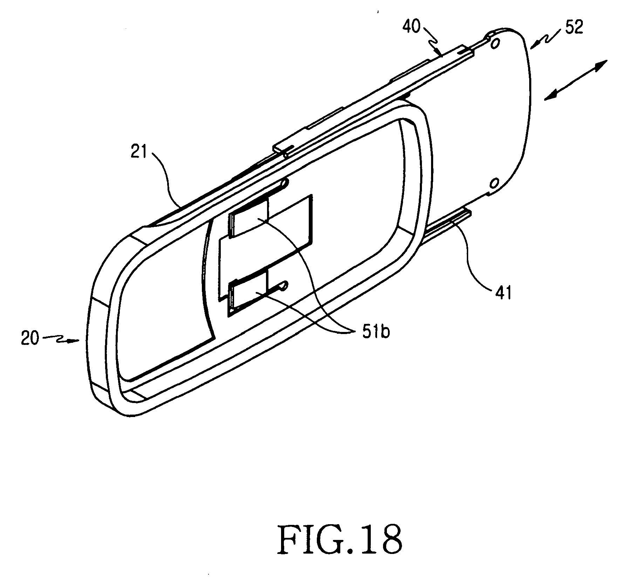

As shown in FIG. 18, the leaf spring 51 has support members 51b attached to the bottom surface thereof to support the elastic force of the leaf spring 51.

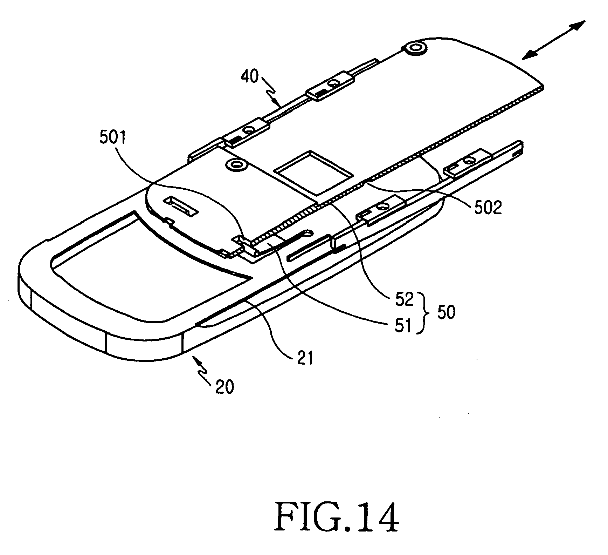

As shown in FIG. 14, the engagement protrusion 51a has a predetermined curvature so that it can engage and disengage the engagement holes 501 and the catching grooves 502 of the movement stop member 52.

As shown in FIGs. 5, 10 and 11, the movement stop member 52 includes at least one coupling protrusion 52a, at least one guide movement groove 52b, and at least one engagement means 52c. The coupling protrusion 52a is formed on the top surface of the movement stop member 52 to be coupled to the coupling hole 42b formed on the side sliding modules 40. The guide movement groove 52b is formed adjacently to the coupling protrusion 52a to be coupled to the guide protrusion 22 of the main housing 20 along the longitudinal direction and guide the sliding movement of the movement stop member 52.

As shown in FIGs. 5, 9 and 14, the engagement means 52c is positioned on the interior of the movement stop member 52 and is adapted to engage or disengage the hook portion 51 of the main housing 20 as the sliding housing 30 slides. The engagement means 52c includes a pair of engagement holes 501 and a pair of catching grooves 502.

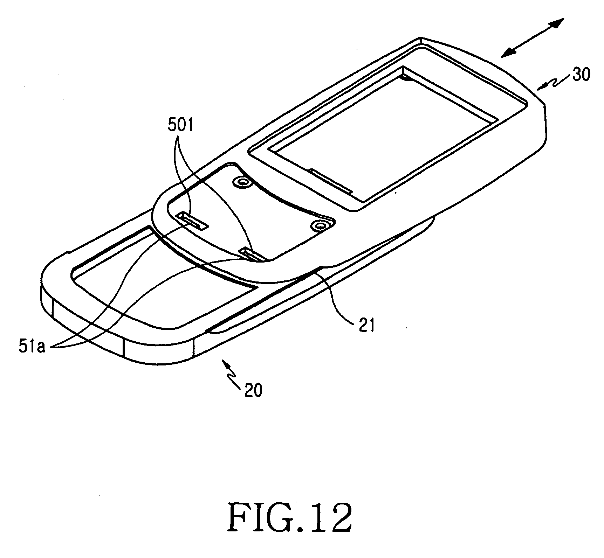

As shown in FIGs. 12, 13, 16, and 17, the engagement holes 501 are formed on the interior of the movement stop member 52 and are adapted to engage and stop the engagement protrusion 51a of the hook portion 51 when the sliding housing 30 slides away from the main housing 20.

As shown in FIGs. 5 and 6, the catching grooves 502 are formed on the interior of the movement stop member 52 so that the engagement protrusion 51a of the hook portion 51 is inserted therein and stopped when the sliding housing 30 slides downward, toward the main housing 20.

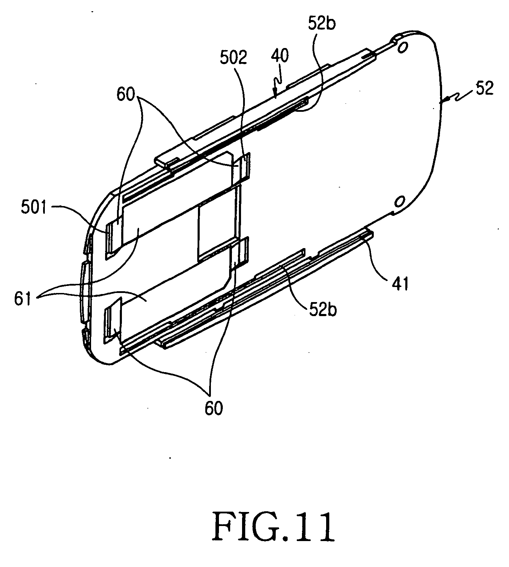

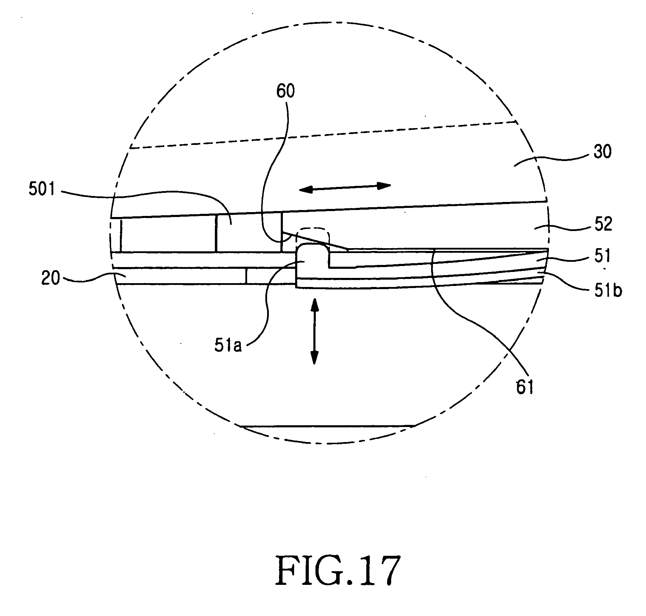

As shown in FIGs. 5 and 17, at least one guide slant surface 60 is formed adjacent to the engagement holes 501 and the catching grooves 502 to guide the hook portion 51 and a guide surface 61 is formed between the engagement holes 501, and the catching grooves 502, to guide the sliding movement of the hook portion 51. As shown in FIG. 11, the guide slant surfaces 60 are preferably symmetrical about the guide surface 61.

As shown in FIG. 5, the movement stop member 52 has a fixing portion 503 formed on an end thereof to be coupled, and fixed to, the interior of the sliding housing 30. At least one fixing protrusion 504 is formed on a side thereof to be coupled to the side sliding modules 40, and at least one screw fastening portion 505 formed on the interior thereof fastens the stop member 52 to the sliding housing 30 with a screw 70.

Operation of the sliding module for a sliding-type portable terminal according to a first embodiment of the present invention, configured as above, will now be described in more detail with reference to FIGs. 5 to 18.

As shown in FIG. 5, a pair of side sliding modules 40 are mounted between both sides of the sliding housing 30 with screws 70.

At least one module fastening portion 42 formed on the pair of side sliding modules 40 enables mounting to the interior of the sliding housing 30, preferably along its longitudinal direction.

A screw 70 is fastened to the screw hole 42a formed on the module fastening portion 42 to secure it to the sliding housing 30. The movement stop member 52 is coupled to the interior of the sliding housing 30.

As shown in FIGs. 5 and 9, the module fastening portion 42 has a coupling hole 42b formed thereon for securing to the coupling protrusion 52a on the movement stop member 52. The movement stop member 52 is mounted on the interior of the sliding housing 30 and the coupling protrusion 52a is attached to the coupling hole 42b.

The fixing portion 503 formed on an end of the movement stop member 52 is coupled to the interior of the sliding hosing 30.The movement stop member 52 has at least one fixing protrusion 504 formed on a side thereof to be coupled to the side sliding modules 40.

The movement stop member 52 has at least one screw fastening portion 505 formed on its interior to be fastened to the sliding housing 30 with a screw 70. A screw 70 is fastened to the screw fastening portion 505 to fix the movement stop member 52 to the interior of the sliding housing 30.

As shown in FIG. 6, the sliding housing 30 is coupled to the top surface of the main housing 20 in such a manner that it can slide.

As shown in FIGs. 7, 8, 9, and 10, the side sliding modules 40 are coupled to the guide rails 21 positioned on both ends of the main housing 20 in such a manner that they can slide.

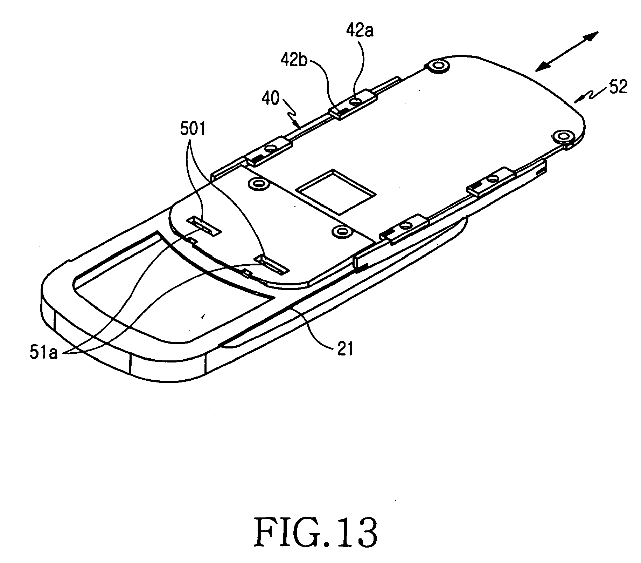

As shown in FIGs. 12 and 13, the sliding housing 30 is slid upward, away from the main housing 20 to open the terminal.

As shown in FIG. 14, the side sliding modules 40 slide along the guide rails 21 of the main housing 20.

As shown in FIGs. 5 and 11, the movement stop member 52 travels together with the sliding housing 30. The movement stop member 52 has at least one guide movement groove 52b formed thereon coupled to the guide protrusion 22 of the main housing 20 to guide the sliding movement of the movement stop member 52.

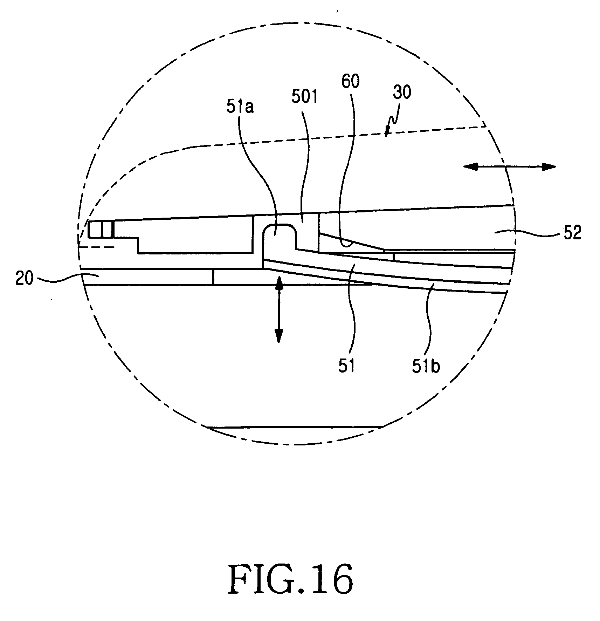

As shown in FIGs. 15 and 16, the hook portion 51 formed on the main housing 20 disengages the catching grooves 502 formed on the movement stop member 52 by means of an elastic force and is inserted into the engagement holes 501, thus limiting the sliding movement of the sliding housing 30.

The hook portion 51 is made up of a leaf spring 501 that provides an elastic force making it easier to engage and disengage the engagement holes 501 and the catching grooves 502.

As shown in FIGs. 5 and 17, at least one guide slant surface 60 is formed adjacent to the engagement holes 501 and the catching grooves 502, to guide the hook portion 51. When the hook portion 51 disengages the catching grooves 502 and slides it is guided by the guide slant surface 60. When inserted into the engagement holes 501, the hook portion 51 is guided by another guide slant surface 60 formed adjacently to the engagement holes 501.

As shown in FIGs. 11 and 17, the hook portion 51 slides on the guide surface 61, which is formed between the catching grooves 502 and the engagement holes 501, to facilitate sliding movement of the hook portion 51.

When the sliding housing 30 is moved downward, toward the main housing 20 as shown in FIG. 6, the movement stop member 52 travels together with the sliding housing 30. The sliding housing 30 and the slide sliding modules 40 again slide along the guide rails 21 to their original position.

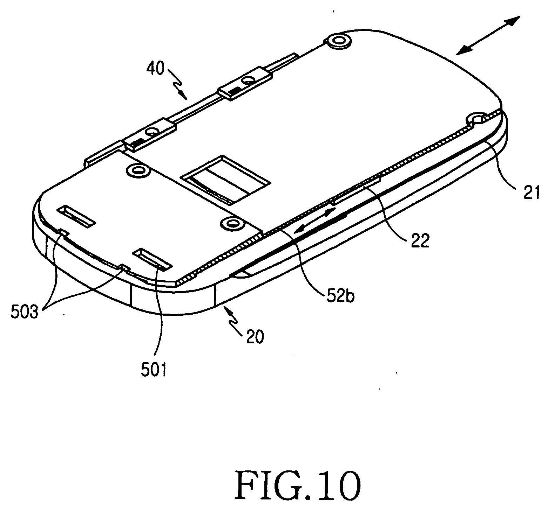

As shown in FIGs. 9 and 10, when closing the terminal, the hook portion 51 disengages the engagement holes 501 by means of an elastic force and is again inserted into the catching grooves 502. The sliding housing 30 then ceases to move.

As mentioned above, the sliding module for a sliding-type portable terminal according to the present invention has a pair of side sliding modules for easy sliding opening/closing operation of the terminal. Reduced size and thickness of the terminal makes it possible to manufacture a terminal of a compact and slim size.

While the invention has been shown and described with reference to certain preferred embodiments thereof, it will be understood by those skilled in the art that various changes in form and details may be made therein without departing from the scope of the invention as defined by the appended claims.

## Claims

1. A sliding module (10) for a sliding-type portable terminal comprising:
a main housing (20) extending along a longitudinal direction;
a sliding housing (30) slidingly coupled to the main housing (20);
a pair of side sliding modules (40) positioned between both sides of the sliding housing (30) and coupled to both longitudinal ends of the main housing (20) to slide the sliding housing (30) in a direction toward or away from the main housing (20); and
at least one stopper means (50) positioned between the main housing (20) and sliding housing (30) and adapted to engage or disengage, as it slides together with the sliding housing (30), to limit the sliding movement of the sliding housing (30), **characterized in that** the stopper means (50) comprises
at least one hook portion (51) positioned on the interior of the main housing (20) to provide an elastic force; and,
a movement stop member (52) mounted on the interior of the sliding housing (30) while extending along the longitudinal direction and adapted to engage or disengage said hook portion, as it travels together with the sliding housing (30), by means of the elastic force from the hook portion (51) itself.

2. The sliding module (10) for a sliding-type portable terminal as claimed in claim 1, wherein the main housing (20) has guide rails (21) formed on both ends thereof along the longitudinal direction to guide the sliding movement of the pair of side sliding modules (40), and at least one guide protrusion (22) formed adjacent to the guide rails (21) coupled to the stopper means (50) and guiding the sliding movement of the side sliding modules (40).

3. The sliding module (10) for a sliding-type portable terminal as claimed in claim 1 or 2, wherein the side sliding modules (40) are mounted on an interior of the sliding housing (30).

4. The sliding module (10) for a sliding-type portable terminal as claimed in claim 2, wherein the pair of side sliding modules (40) comprise:
a guide groove (41) extending along the longitudinal direction of the sliding housing (30) and slidingly coupled to the guide rails (21); and,
at least one module fastening portion (42) formed along the guide groove (41) and mounted on an interior of the sliding housing (30).

5. The sliding module (10) for a sliding-type portable terminal as claimed in claim 4, wherein the module fastening portion (42) has a screw hole (42a) formed thereon for fastening to the sliding housing (30) and a coupling hole (42b) formed thereon adjacent to the screw hole (42a) to be coupled to a coupling protrusion (52a) formed on a movement stop member (52) of the stopper means (50).

6. The sliding module (10) for a sliding-type portable terminal as claimed in one of claims 1 to 5, wherein the pair of side sliding modules (40) are constructed of a metallic material.

7. The sliding module (10) for a sliding-type portable terminal as claimed in claim 5, wherein the hook portion (51) is a leaf spring, an engagement protrusion (51a) is formed on an end of the leaf spring (51), an end of the leaf spring (51) is bent at a predetermined angle to provide the engagement protrusion (51a) with an elastic force, and a support member (51b) is attached to a bottom surface of the leaf spring (51) to support the elastic force of the leaf spring (51).

8. The sliding module (10) for a sliding-type portable terminal as claimed in claim 7, wherein the engagement protrusion (51a) has a predetermined curvature to engage and disengage the movement stop member (52).

9. The sliding module (10) for a sliding-type portable terminal as claimed in claim 5, wherein the movement stop member (52) comprises:
at least one coupling protrusion (52a) formed on a top surface thereof to be coupled to the coupling hole (42b) formed on the module fastening portion (42a) of the side sliding modules (40);
at least one guide movement groove (52b) formed adjacent to the coupling protrusion (52a) along the longitudinal direction to be coupled to a guide protrusion (22) of the main housing (20) and guide the sliding movement of the movement stop member (52); and
at least one engagement means (52c) positioned on an interior of the movement stop member (52) to engage or disengage the hook portion (51) of the main housing (20) as the sliding housing (30) slides.

10. The sliding module (10) for a sliding-type portable terminal as claimed in claim 9, wherein the engagement means (52c) has a pair of engagement holes (501) formed thereon to engage an engagement protrusion (51a) of the hook portion (51) and stop it when the sliding housing (30) slides away from the main housing (20) and a pair of catching grooves (502) formed thereon so that the engagement protrusion (51a) of the hook portion (51) is inserted therein and stopped when the sliding housing (30) slides in a direction towards the main housing (20).

11. The sliding module (10) for a sliding-type portable terminal as claimed in claim 10, wherein at least one guide slant surface (60) is formed adjacent to the engagement holes (501) and the catching grooves (502) to guide the hook portion (51); and a guide surface (61) is formed between the engagement holes (501) and the catching grooves (502) to guide the hook portion (51) in such a manner that it can slide.

12. The sliding module (10) for a sliding-type portable terminal as claimed in claim 11, wherein the guide slant surfaces (60) are symmetrical about the guide surface (61).

13. The sliding module (10) for a sliding-type portable terminal as claimed in claim 5, wherein the movement stop member (52) has a fixing portion (503) formed on an end thereof to be coupled, and fixed to, the interior of the sliding housing (30), at least one fixing protrusion (504) formed on a side thereof along the longitudinal direction thereof to be coupled and fixed to the side sliding modules (40); and, at least one screw fastening portion (505) formed on a interior thereof to be screw-fastened to the sliding housing (30).

14. The sliding module (10) for a sliding-type portable terminal as claimed in claim 10, wherein, when the sliding housing (30) slides away from the main housing (20), the side sliding modules (40) slide along the guide rails (21) of the main housing (20), the movement stop member (52) travels together as the sliding housing (30) travels, and the hook portion (51) of the main housing (20) disengages the catching grooves (502) of the movement stop member (52) by an elastic force and engages the engagement holes (501) to limit the sliding movement of the sliding housing (30) and, when the sliding housing (30) slides in a direction towards the main housing (20), the sliding housing (30) and the side sliding modules (40) slide along the guide rails (21) and the hook portion (51) disengages the engagement holes (501) by an elastic force and is again inserted into the catching grooves (502) to stop the movement of the sliding housing (30).

## Patentansprüche

1. Eine Schiebevorrichtung (10) für ein verschiebbares Kommunikationsendgerät weist auf:
ein sich entlang einer Längsrichtung erstreckendes Hauptgehäuse (20);
ein verschiebbar mit dem Hauptgehäuse (20) gekoppeltes Schiebegehäuse (30);
ein zwischen beiden Seiten des Schiebegehäuses (30) positioniertes und mit beiden Längsenden des Hauptgehäuses (20) gekoppeltes Paar seitlicher Schiebevorrichtungen (40), um das Schiebegehäuse (30) in eine Richtung zu dem Hauptgehäuse (20) hin oder davon weg zu schieben; und
wenigstens ein Stoppermittel (50), welches zwischen dem Hauptgehäuse (20) und dem Schiebegehäuse (30) positioniert und dafür geeignet ist, einzurasten oder sich zu lösen während es zusammen mit dem Schiebegehäuse (30) gleitet, um die Schiebebewegung des Schiebegehäuses (30) zu begrenzen,
**dadurch gekennzeichnet, dass** das Stoppermittel (50) umfasst
wenigstens ein Hakenteil (51), welches an der Innenseite des Hauptgehäuses (20) positioniert ist, um eine Federkraft zu liefern; und,
ein Bewegungsstoppelement (52), welches an der Innenseite des Schiebegehäuses (30) montiert ist, während es sich entlang der Längsrichtung erstreckt und geeignet ist, mit dem Hakenteil (51) einzurasten oder sich davon zu lösen während es sich zusammen mit dem Schiebegehäuse (30), durch die Federkraft des Hakenteils (51) an sich, bewegt.

2. Die Schiebevorrichtung (10) für ein verschiebbares Kommunikationsendgerät wie in Anspruch 1 beansprucht, wobei das Hauptgehäuse (20) Führungsschienen (21) hat, die an beiden Enden davon entlang der Längsrichtung gebildet sind, um die Schiebebewegung des Paars seitlicher Schiebevorrichtungen (40) zu führen,
und wenigstens einen Führungsvorsprung (22), der benachbart zu den Führungsschienen (21) gebildet ist und mit dem Stoppermittel (50) gekoppelt ist und die Schiebebewegung der seitlichen Schiebevorrichtungen (40) führt.

3. Die Schiebevorrichtung (10) für ein verschiebbares Kommunikationsendgerät wie in Anspruch 1 oder 2 beansprucht, wobei die seitlichen Schiebevorrichtungen (40) an einer Innenseite des Schiebegehäuses (30) montiert sind.

4. Die Schiebevorrichtung (10) für ein verschiebbares Kommunikationsendgerät wie in Anspruch 2 beansprucht, wobei das Paar seitlicher Schiebevorrichtungen (40) umfasst:
eine Führungsnut (41), die sich entlang der Längsrichtung des Schiebegehäuses (30) erstreckt und schiebbar mit den Führungsschienen (21) gekoppelt ist; und,
wenigstens ein Modulbefestigungsteil (42), welches entlang der Führungsnut (41) gebildet ist und an einer Innenseite des Schiebegehäuses (30) montiert ist.

5. Die Schiebevorrichtung (10) für ein verschiebbares Kommunikationsendgerät wie in Anspruch 4 beansprucht, wobei das Modulbefestigungsteil (42) ein Befestigungsloch (42 a) hat, welches daran zur Befestigung an dem Schiebegehäuse (30) gebildet ist und eine Anschlussbohrung (42 b), die daran benachbart zu dem Befestigungsloch (42a) gebildet ist, um mit einem Kopplungsvorsprung (52a) gekoppelt zu sein, der an einem Bewegungsstoppelement (52) des Stoppermittels (50) gebildet ist.

6. Die Schiebevorrichtung (10) für ein verschiebbares Kommunikationsendgerät wie in einem der Ansprüche 1 bis 5 beansprucht, wobei das Paar seitlicher Schiebevorrichtungen (40) aus einem metallischen Material hergestellt ist.

7. Die Schiebevorrichtung für ein verschiebbares Kommunikationsendgerät wie in Anspruch 5 beansprucht, wobei das Hakenteil (51) eine Blattfeder ist, ein Einrastvorsprung (51a) an einem Ende der Blattfeder (51) gebildet ist, ein Ende der Blattfeder (51) in einem vorbestimmten Winkel gebogen ist, um den Einrastvorsprung (51a) mit einer Federkraft auszustatten, und ein Stützteil (51b) ist an einer Bodenfläche der Blattfeder (51) befestigt, um die Federkraft der Blattfeder (51) zu stützen.

8. Die Schiebevorrichtung (10) für ein verschiebbares Kommunikationsendgerät wie in Anspruch 7 beansprucht, wobei der Einrastvorsprung (51a) eine vorbestimmte Krümmung hat, um in das Bewegungsstoppelement (52) einzurasten und sich davon zu befreien.

9. Die Schiebevorrichtung (10) für ein verschiebbares Kommunikatiönsendgerät wie in Anspruch 5 beansprucht, wobei das Bewegungsstoppelement (52) aufweist:
wenigstens einen Kopplungsvorsprung (52a), der an einer oberen Fläche davon gebildet ist, um mit der Anschlussbohrung (42 b) gekoppelt zu sein, die an dem Modulbefestigungsteil (42) der seitlichen Schiebevorrichtungen (40) gebildet ist,
wenigstens eine Führungsbewegungsnut (52b), die benachbart zu dem Kopplungsvorsprung (52a) entlang der Längsrichtung gebildet ist, um mit einem Führungsvorsprung (22) des Hauptgehäuses (20) gekoppelt zu sein und die Schiebebewegung des Bewegungsstoppelements (52) führt; und
wenigstens ein Einrastmittel (52c), welches an einer Innenseite des Bewegungsstoppelements (52) positioniert ist, um das Hakenteil (51) des Hauptgehäuses (20) einzurasten oder zu lösen, wenn das Schiebegehäuse (30) gleitet.

10. Die Schiebevorrichtung (10) für ein verschiebbares Kommunikationsendgerät wie in Anspruch 9 beansprucht, wobei das Einrastmittel (52c) ein paar Einrastbohrungen (501) hat die daran gebildet sind, um in einen Einrastvorsprung (51a) des Hakenteils (51) einzurasten und dieses zu stoppen, wenn das Schiebegehäuse (30) von dem Hauptgehäuse (20) weg gleitet und ein Paar Feststellnuten (502), die daran gebildet sind, so dass der Einrastvorsprung (51a) des Hakenteils (51) darin eingebracht ist und gestoppt ist, wenn das Schiebegehäuse (30) in eine Richtung zu dem Hauptgehäuse (20) hin gleitet.

11. Die Schiebevorrichtung (10) für ein verschiebbares Kommunikationsendgerät wie in Anspruch 10 beansprucht, wobei wenigstens eine geneigte Führungsfläche (60) benachbart zu den Einrastbohrungen (501) und den Feststellnuten (502) geformt ist, um das Hakenteil (51) zu führen; und eine Führungsfläche (61) ist zwischen den Einrastbohrungen (501) und den Feststellnuten (502) gebildet, um das Hakenteil (51) derart zu führen, dass es gleiten kann.

12. Die Schiebevorrichtung (10) für ein verschiebbares Kommmunikationsendgerät wie in Anspruch 11 beansprucht, wobei die geneigten Führungsflächen (60) symmetrisch zu der Führungsfläche (61) sind.

13. Die Schiebevorrichtung (10) für ein verschiebbares Kommunikationsendgerät wie in Anspruch 5 beansprucht, wobei das Bewegungsstoppelement (52) ein Befestigungsteil (503) hat, das an einem Ende davon gebildet ist, um mit der Innenseite des Schiebegehäuses (30) gekoppelt und befestigt zu sein, wenigstens ein Befestigungsvorsprung (504) ist an einer Seite davon entlang der Längsrichtung davon gebildet, um mit den seitlichen Schiebevorrichtungen (40) gekoppelt und befestigt zu sein; und wenigstens ein Schraubenbefestigungsteil (505), das an einer Innenseite davon gebildet ist, um mit dem Schiebgehäuse (30) schraubend befestigt zu sein.

14. Die Schiebevorrichtung (10) für ein verschiebbares Kommunikationsendgerät wie in Anspruch (10) beansprucht, wobei, wenn das Schiebegehäuse (30) von dem Hauptgehäuse (20) weg gleitet, die seitlichen Schiebevorrichtungen (40) entlang der Führungsschienen (21) des Hauptgehäuses (20) gleiten, das Bewegungsstoppelement (52) sich zusammen bewegt während sich das Schiebegehäuse (30) bewegt, und das Hakenteil (51) des Hauptgehäuses (20) sich von den Feststellnuten (502) des Bewegungsstoppelements (52) durch eine Federkraft löst und in die Einrastbohrungen (501) einrastet, um die Schiebebewegung des Schiebegehäuses (30) zu begrenzen und, wenn das Schiebegehäuse (30) in eine Richtung zu dem Hauptgehäuse (20) hin gleitet, gleiten das Schiebegehäuse (30) und die seitlichen Schiebevorrichtungen (40) entlang den Führungsschienen (21) und das Hakenteil (51) löst sich durch eine Federkraft von den Einrastbohrungen (501) und ist wieder in die Feststellnuten (502) eingeführt, um die Bewegung des Schiebegehäuses (30) zu stoppen.

## Revendications

1. Module coulissant (10) pour un terminal portable de type coulissant, comportant :
un boîtier principal (20) s'étendant suivant une direction longitudinale ;
un boîtier coulissant (30) relié de façon coulissante au boîtier principal (20) ;
une paire de modules coulissants latéraux (40) positionnés entre les deux côtés du boîtier coulissant (30) et reliés aux deux extrémités longitudinales du boîtier principal (20) pour faire coulisser le boîtier coulissant (30) dans un sens le rapprochant ou l'éloignant du boîtier principal (20) ; et
au moins un moyen d'arrêt (50) positionné entre le boîtier principal (20) et le boîtier coulissant (30) et conçu pour effectuer un engagement ou un dégagement, pendant qu'il coulisse avec le boîtier coulissant (30), afin de limiter le mouvement de coulissement du boîtier coulissant (30),
**caractérisé en ce que** le moyen d'arrêt (50) comporte
au moins une partie à crochet (51) positionnée à l'intérieur du boîtier principal (20) pour produire une force élastique ; et
un élément (52) d'arrêt de mouvement monté à l'intérieur du boîtier coulissant (30) tout en s'étendant suivant la direction longitudinale et conçu pour engager ou dégager ladite partie à crochet pendant qu'il se déplace avec le boîtier coulissant (30), au moyen de la force élastique de la partie à crochet (51) elle-même.

2. Module coulissant (10) pour un terminal portable de type coulissant selon la revendication 1, dans lequel le boîtier principal (20) comporte des rails de guidage (21) formés sur ses deux extrémités suivant la direction longitudinale afin de guider le mouvement de coulissement de la paire de modules coulissants latéraux (40), et au moins une saillie de guidage (22) formée de façon à être adjacente aux rails de guidage (21), reliée au moyen d'arrêt (50) et guidant le mouvement de coulissement des modules coulissants latéraux (40).

3. Module coulissant (10) pour un terminal portable de type coulissant selon la revendication 1 ou 2, dans lequel les modules coulissants latéraux (40) sont montés à l'intérieur du boîtier coulissant (30).

4. Module coulissant (10) pour un terminal portable de type coulissant selon la revendication 2, dans lequel la paire de modules coulissants latéraux (40) comporte :
une gorge de guidage (41) s'étendant suivant la direction longitudinale du boîtier coulissant (30) et reliée de façon coulissante aux rails de guidage (21) ; et
au moins une partie (42) de fixation de module formée le long de la gorge de guidage (41) et montée à l'intérieur du boîtier coulissant (30).

5. Module coulissant (10) pour un terminal portable de type coulissant selon la revendication 4, dans lequel la partie (42) de fixation de module présente un trou pour vis (42a) formé dans cette partie pour une fixation au boîtier coulissant (30) et un trou d'accouplement (42b) formé dans cette partie à proximité immédiate du trou pour vis (42a) pour être relié à une saillie d'accouplement (52a) formée sur un élément (52) d'arrêt de mouvement du moyen d'arrêt (50).

6. Module coulissant (10) pour un terminal portable de type coulissant selon l'une des revendications 1 à 5, dans lequel la paire de modules coulissants latéraux (40) est constituée d'une matière métallique.

7. Module coulissant (10) pour un terminal portable de type coulissant selon la revendication 5, dans lequel la partie à crochet (51) est un ressort plat, une saillie d'engagement (51a) est formée sur une extrémité du ressort plat (51), une extrémité du ressort plat (51) est coudée d'un angle prédéterminé pour pourvoir la saillie d'engagement (51a) d'une force élastique, et un élément de support (51b) est fixé à une surface de dessous du ressort plat (51) pour supporter la force élastique du ressort plat (51).

8. Module coulissant (10) pour un terminal portable de type coulissant selon la revendication 7, dans lequel la saillie d'engagement (51a) présente une courbure prédéterminée pour engager et dégager l'élément (52) d'arrêt de mouvement.

9. Module coulissant (10) pour un terminal portable de type coulissant selon la revendication 5, dans lequel l'élément (52) d'arrêt de mouvement comporte :
au moins une saillie d'accouplement (52a) formée sur une surface de dessus de cet élément pour être accouplée au trou d'accouplement (42b) formé dans la partie (42a) de fixation de module des modules coulissants latéraux (40) ;
au moins une gorge (52b) de mouvement de guidage formée de façon à être adjacente à la saillie d'accouplement (52a) suivant la direction longitudinale pour être accouplée à une saillie de guidage (22) du boîtier principal (20) et pour guider le mouvement de coulissement de l'élément d'arrêt de mouvement (52) ; et
au moins un moyen d'engagement (52c) positionné à l'intérieur de l'élément d'arrêt de mouvement (52) pour engager ou dégager la partie à crochet (51) du boîtier principal (20) pendant que le boîtier coulissant (30) coulisse.

10. Module coulissant (10) pour un terminal portable de type coulissant selon la revendication 9, dans lequel le moyen d'engagement (52c) présente une paire de trous d'engagement (501) formés dans ce moyen pour engager une saillie d'engagement (51a) de la partie à crochet (51) et l'arrêter lorsque le boîtier coulissant (30) s'éloigne en coulissant du boîtier principal (20), et une paire de gorges d'accrochage (502) formées sur lui afin que la saillie d'engagement (51a) de la partie à crochet (51) y soit insérée et arrêtée lorsque le boîtier coulissant (30) coulisse dans un sens le rapprochant du boîtier principal (20).

11. Module coulissant (10) pour un terminal portable de type coulissant selon la revendication 10, dans lequel au moins une surface oblique (60) de guidage est formée à proximité immédiate des trous d'engagement (501) et des gorges d'accrochage (502) pour guider la partie à crochet (51) ; et une surface de guidage (61) est formée entre les trous d'engagement (501) et les gorges d'accrochage (502) afin de guider la partie à crochet (51) d'une manière telle qu'elle peut coulisser.

12. Module coulissant (10) pour un terminal portable de type coulissant selon la revendication 11, dans lequel les surfaces obliques (60) de guidage sont symétriques par rapport à la surface (61) de guidage.

13. Module coulissant (10) pour un terminal portable de type coulissant selon la revendication 5, dans lequel l'élément (52) d'arrêt de mouvement comporte une partie de fixation (503) formée sur une extrémité de cet élément pour être accouplée et fixée à l'intérieur du boîtier coulissant (30), au moins une saillie de fixation (504) formée sur un côté de cet élément suivant sa direction longitudinale pour être accouplée et fixée aux modules coulissants latéraux (40) ; et au moins une partie (505) de fixation par vis formée à l'intérieur de cet élément pour être fixée par vis au boîtier coulissant (30).

14. Module coulissant (10) pour un terminal portable de type coulissant selon la revendication 10, dans lequel, lorsque le module coulissant (30) s'éloigne en coulissant du boîtier principal (20), les modules coulissants latéraux (40) coulissent le long des rails de guidage (21) du boîtier principal (20), l'élément (52) d'arrêt de mouvement se déplace en même temps que le boîtier coulissant (30) se déplace, et la partie à crochet (51) du boîtier principal (20) se dégage des gorges d'accrochage (52) de l'élément (52) d'arrêt de mouvement sous l'effet d'une force élastique et engage les trous d'engagement (501) pour limiter le mouvement de coulissement du boîtier coulissant (30) et, lorsque boîtier coulissant (30) coulisse dans un sens le rapprochant du boîtier principal (20), le boîtier coulissant (30) et les modules coulissants latéraux (40) coulissent le long des rails de guidage (21) et la partie à crochet (51) se dégage des trous d'engagement (501) sous l'effet d'une force élastique et est de nouveau insérée dans les gorges d'accrochage (502) pour arrêter le mouvement du boîtier coulissant (30).
